# EUROPEAN PATENT APPLICATION

(11) **EP 4 458 461 A1**
(43) Date of publication of application: **06.11.2024**
(21) Application number: 22914284.9
(22) Date of filing: 15.12.2022
(51) Int. Cl.: B01J 19/18, B01J 4/00, C01G 49/08

(54) **RECOVERY SYSTEM**

(30) Priority: 31.12.2021 CN 202123449546 U
(71) Applicant: BYD Company Limited, Shenzhen, Guangdong 518118 (CN)
(72) Inventor: MA, Yuegeng, Shenzhen, Guangdong 518118 (CN); LI, Xiaodong, Shenzhen, Guangdong 518118 (CN); LIAN, Junlan, Shenzhen, Guangdong 518118 (CN); LIN, Hongye, Shenzhen, Guangdong 518118 (CN)
(74) Representative: Gulde & Partner
(86) International application number: PCT/CN2022/139177
(87) International publication number: WO 2023/125029

(57) **Abstract**

A recycling system (100) is provided, including: a reaction kettle (10), the reaction kettle (10) being provided with a liquid inlet (11), a gas inlet (13), a liquid outlet (12), and a slag discharging port (14); a stirring device (20), the stirring device (20) being arranged on the reaction kettle (10), the stirring device (20) including a stirring rod (21) and at least one stirring paddle (22), one end of the stirring rod (21) extending into the reaction kettle (10), and the at least one stirring paddle (22) being arranged at the end of the stirring rod (21) extending into the reaction kettle (10); and an electromagnetic device (30), the electromagnetic device (30) including a first electromagnetic coil (31), the first electromagnetic coil (31) being wound on an outer peripheral surface of the reaction kettle (10).

## Description

### CROSS-REFERENCE TO RELATED APPLICATIONS

The present disclosure claims priority to Chinese Patent Application No. 202123449546.X, filed on December 31, 2021 and entitled "RECYCLING SYSTEM". The entire content of the above-referenced application is incorporated herein by reference.

### FIELD

The present disclosure relates to the field of production recycling technologies, and more specifically, to a recycling system.

### BACKGROUND

In the related art, after geothermal water is pumped from geothermal wells, it is usually necessary to separate steam from the geothermal water through reduced-pressure evaporation, flash evaporation, or the like to drive steam turbines to generate electricity. The concentrated geothermal water that remains after separation contains various metal ions, especially alkali metals and alkaline earth metals, as well as different concentrations of lithium, iron, lead, silver, and zinc. Due to the particularity of the concentrated geothermal water, there is still a lack of suitable devices, systems, and operation methods for iron recycling and treatment of other precipitated impurities.

### SUMMARY

The present disclosure is intended to resolve at least one of the technical problems existing in the related art. An object of the present disclosure is to propose a recycling system. The recycling system has a simple structure and high recycling efficiency.

The recycling system according to an embodiment of the present disclosure includes: a reaction kettle, a stirring device, and an electromagnetic device. The reaction kettle is provided with a liquid inlet, a gas inlet, a liquid outlet, and a slag discharging port. The stirring device is arranged on the reaction kettle. The stirring device includes a stirring rod and at least one stirring paddle. One end of the stirring rod extends into the reaction kettle. The stirring paddle is arranged at the end of the stirring rod extending into the reaction kettle. The electromagnetic device includes a first electromagnetic coil. The first electromagnetic coil is wound on an outer peripheral surface of the reaction kettle.

In this way, through arrangement of the reaction kettle, iron ions in geothermal water may react chemically with gas and ingredients of chemical reagents in the reaction kettle to generate ferroferric oxide. Through arrangement of the stirring device on the reaction kettle, geothermal water may completely contact the gas, which is beneficial to suspension of the ferroferric oxide in the geothermal water. In addition, through arrangement of the electromagnetic device, the electromagnetic device may generate a magnetic attraction force to attract the ferroferric oxide and realize separation of the ferroferric oxide from the geothermal water. When the electromagnetic device is turned off, the magnetic attraction force disappears to facilitate discharging of the ferroferric oxide from the slag discharging port, to realize the recycling of the ferroferric oxide, a simple structure, and high recycling efficiency.

In some embodiments, the recycling system further includes a liquid distributor. The liquid distributor is connected to an inner wall of the reaction kettle. The liquid distributor is located above the first electromagnetic coil. A liquid distributor outlet is formed at a bottom of an outer peripheral side of the liquid distributor.

In some embodiments, the liquid distributor is connected with the liquid outlet.

In some embodiments, the electromagnetic device further includes a second electromagnetic coil. An outlet tube is arranged at the slag discharging port. The second electromagnetic coil is wound outside the outlet tube.

In some embodiments, the outlet tube includes a first tube section, a second tube section, and a third tube section. One end of the first tube section is connected with the slag discharging port. The second tube section is coaxially arranged with the first tube section. The second tube section is located on a side of the first tube section away from a center of the reaction kettle. The third tube section is connected between another end of the first tube section and the second tube section. A central axis of the third tube section deviates from a central axis of the first tube section. The second electromagnetic coil is wound outside the third tube section.

In some embodiments, an exhausting port and a liquid return port are formed on the reaction kettle. The recycling system further includes a condenser and a gas-liquid separator. One end of the condenser is connected with the exhausting port. The gas-liquid separator includes a gas-liquid separator inlet, a gas-liquid separator exhausting port, and a gas-liquid separator liquid outlet. The gas-liquid separator inlet is connected with another end of the condenser. The gas-liquid separator exhausting port is in communication with the outside. The gas-liquid separator liquid outlet is connected with the liquid return port.

In some embodiments, a gas distribution disk in communication with the gas inlet is arranged in the reaction kettle. Multiple aeration heads are arranged on the gas distribution disk.

In some embodiments, a filter membrane is arranged at the liquid outlet.

In some embodiments, an aperture of the filter membrane is d, where d satisfies: 0.3 µm ≤ d ≤ 1 µm .

In some embodiments, the recycling system further includes a box. The reaction kettle is arranged in the box.

In some embodiments, the liquid inlet is formed on a top of the reaction kettle. The gas inlet and the liquid outlet are spaced apart from each other and formed on a bottom of the reaction kettle. The slag discharging port is formed on the bottom of the reaction kettle and is spaced apart from the liquid outlet.

In some embodiments, the reaction kettle includes a metal member or a plastic member.

In some embodiments, the stirring rod and the stirring paddle each include a stainless steel member.

In some embodiments, a return valve is arranged on a liquid pipeline between the liquid outlet and the liquid distributor.

In some embodiments, the third tube section is curved.

In some embodiments, the multiple aeration heads are arranged at intervals in a circumferential direction of the reaction kettle.

In some embodiments, the gas distribution disk includes a main tube and multiple branch tubes connected with the main tube. The multiple branch tubes are distributed on the main tube at intervals. The multiple aeration heads are arranged on each of the branch tubes at intervals. The multiple aeration heads are in communication with the branch tubes.

In some embodiments, one end of the main tube is in communication with the branch tube, and another end of the main tube extends through the reaction kettle from the bottom of the reaction kettle to communicate with the outside.

In some embodiments, the multiple branch tubes are symmetrically arranged in the reaction kettle relative to the central axis of the reaction kettle.

In some embodiments, the recycling system further includes an air compressor. The air compressor is connected with the gas distribution disk. Additional aspects and advantages of the present disclosure are to be partially given in the following description, and partially become apparent in the following description or learned through the practice of the present disclosure.

### BRIEF DESCRIPTION OF THE DRAWINGS

The foregoing and/or additional aspects and advantages of the present disclosure will become apparent and easy to understand in the description of the embodiments made with reference to the following accompanying drawings.
FIG. 1 is a schematic structural diagram of a recycling system according to an embodiment of the present disclosure.
FIG. 2 is a schematic structural diagram of a liquid distributor of the recycling system in FIG. 1.
FIG. 3 is a schematic structural diagram of a gas distribution disk of the recycling system in FIG. 1.

### Reference numerals:

recycling system 100;
reaction kettle 10; liquid inlet 11; liquid outlet 12; filter membrane 121; gas inlet 13; slag discharging port 14; outlet tube 15; first tube section 151; second tube section 152; third tube section 153; exhausting port 16; liquid return port 17;
stirring device 20; stirring rod 21; stirring paddle 22;
electromagnetic device 30; first electromagnetic coil 31; second electromagnetic coil 32;
liquid distributor 40; liquid distributor outlet 41; condenser 50;
gas-liquid separator 60; gas-liquid separator inlet 61; gas-liquid separator exhausting port 62; gas-liquid separator liquid outlet 63;
gas distribution disk 70; aeration head 71; main tube 710; branch tube 720;
box 80; air compressor 90; return valve 101; valve body 102; drain valve 103; and slag discharging valve 104.

### DETAILED DESCRIPTION

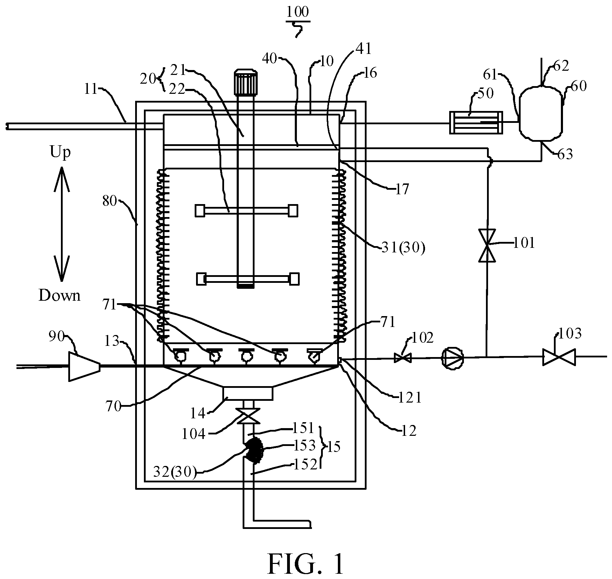

Embodiments of the present disclosure are described in detail below, and the embodiments described with reference to accompanying drawings are exemplary. A recycling system 100 according to the embodiments of the present disclosure is described below with reference to FIG. 1 to FIG. 3. The recycling system 100 includes a reaction kettle 10, a stirring device 20, and an electromagnetic device 30. An example in which the recycling system 100 is configured to recycle iron ions in geothermal water pumped from geothermal wells is used for description, which does not represent a limitation thereto. All magnetic ions after precipitation in the geothermal water may be recycled through the recycling system 100 of the present disclosure.

Specifically, as shown in FIG. 1, the reaction kettle 10 is provided with a liquid inlet 11, a gas inlet 13, a liquid outlet 12, and a slag discharging port 14. The stirring device 20 is arranged on the reaction kettle 10. The stirring device 20 includes a stirring rod 21 and at least one stirring paddle 22. One end of the stirring rod 21 extends into the reaction kettle 10, and another end of the stirring rod 21 is exposed outside the reaction kettle 10. The stirring paddle 22 is arranged at the end of the stirring rod 21 extending into the reaction kettle 10. The electromagnetic device 30 includes a first electromagnetic coil 31. The first electromagnetic coil 31 is wound on an outer peripheral surface of the reaction kettle 10.

Geothermal water may enter the reaction kettle 10 through the liquid inlet 11. The geothermal water may be mixed with chemical reagents containing sodium hydroxide. Gas (for example, air or oxygen) is introduced through the gas inlet 13 to enable the geothermal water to react in the reaction kettle 10, so that iron ions in the geothermal water may generate ferroferric oxide, the stirring paddle 22 is in the reaction kettle 10 to stir internal geothermal water, the gas may be fully mixed with and contact the geothermal water, and the generated ferroferric oxide may be suspended in the geothermal water after stirring. After the first electromagnetic coil 31 is energized, the ferroferric oxide may be adsorbed on an inner wall of the reaction kettle 10 under a magnetic attraction force generated by the first electromagnetic coil 31 and a centrifugal force generated by stirring of the stirring device 20. After the first electromagnetic coil 31 is deenergized, the magnetic attraction force disappears, and the ferroferric oxide may be discharged through the slag discharging port 14 of the reaction kettle 10.

In the recycling system 100 according to the embodiment of the present disclosure, through arrangement of the reaction kettle 10, iron ions in geothermal water may react chemically with gas and ingredients of chemical reagents in the reaction kettle 10 to generate ferroferric oxide. Through arrangement of the stirring device 20 on the reaction kettle 10, geothermal water may completely contact the gas, which is beneficial to suspension of the ferroferric oxide in the geothermal water. In addition, through arrangement of the electromagnetic device 30, the electromagnetic device 30 may generate a magnetic attraction force to attract the ferroferric oxide and realize separation of the ferroferric oxide from the geothermal water. When the electromagnetic device 30 is turned off, the magnetic attraction force disappears to facilitate discharging of the ferroferric oxide from the slag discharging port 14, to realize a simple structure and high recycling efficiency. The recycling system 100 may be used alone or as a part of other systems, which has high practicability and flexibility, avoids introducing additional water sources, saves use of fresh water, and improves recycling efficiency of to-be-treated geothermal water.

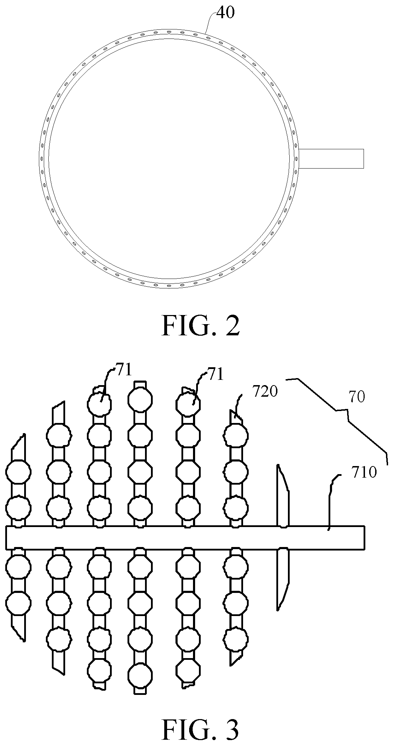

In some embodiments, as shown in FIG. 1 and FIG. 2, the recycling system 100 further includes a liquid distributor 40. The liquid distributor 40 is connected to the inner wall of the reaction kettle 10, and the liquid distributor 40 is located above the first electromagnetic coil 31. A liquid distributor outlet 41 is formed on a bottom of an outer peripheral side of the liquid distributor 40. When the ferroferric oxide is adsorbed on the peripheral surface of the reaction kettle 10, liquid in the liquid distributor 40 may flow out from the liquid distributor outlet 41 and wash the ferroferric oxide adsorbed on the peripheral surface of the reaction kettle 10 to remove impurities mixed in the ferroferric oxide. The liquid distributor 40 may be of one of a perforated disk type, a flume type, and a hybrid type.

In some embodiments, as shown in FIG. 1, the liquid distributor 40 is connected with the liquid outlet 12. A return valve 101 may be arranged at the liquid outlet 12. The return valve 101 is arranged on a liquid pipeline between the liquid outlet 12 and the liquid distributor 40. After the return valve 101 is opened, the liquid outlet 12 may recycle part of the discharged geothermal water, so that this part of the geothermal water may flow toward the liquid distributor 40 to clean the ferroferric oxide, thereby realizing recycling use of the geothermal water and achieving an energy-saving effect.

In some embodiments, as shown in FIG. 1, the electromagnetic device 30 further includes a second electromagnetic coil 32. An outlet tube 15 is arranged at the slag discharging port 14. The second electromagnetic coil 32 is wound outside the outlet tube 15. The slag discharging port 14 is arranged below the reaction kettle 10. When the geothermal water in the reaction kettle 10 is discharged or the geothermal water is lower than the lowest point of the first electromagnetic coil 31, the liquid outlet 12 is closed, the slag discharging port 14 is opened, and the impurities that are not adsorbed are discharged from the slag discharging port 14 into the outlet tube 15. In this case, the second electromagnetic coil 32 arranged on the outside of the outlet tube 15 operates, so that the ferroferric oxide can be adsorbed onto a wall of the outlet tube 15, and the impurities are discharged from the outlet tube 15, thereby achieving further filtration of impurities.

Therefore, through arrangement of the second electromagnetic coil 32, a number of times of extracting ferroferric oxide from impurities may be increased, so that desired ferroferric oxide can be recycled as much as possible, thereby improving recycling efficiency of the recycling system 100.

In some embodiments, as shown in FIG. 1, the outlet tube 15 includes a first tube section 151, a second tube section 152, and a third tube section 153. One end of the first tube section 151 is connected with the slag discharging port 14. The second tube section 152 is located on a side of the first tube section 151 away from a center of the reaction kettle 10. The third tube section 153 is connected between another end of the first tube section 151 and the second tube section 152. A central axis of the third tube section 153 deviates from a central axis of the first tube section 151. The second electromagnetic coil 32 is wound outside the third tube section 153. In some embodiments, the second tube section 152 is coaxially arranged with the first tube section 151. To be specific, a central axis of the second tube section 152 is collinear with the central axis of the first tube section 151. In some other embodiments, the second tube section 152 is not coaxially arranged with the first tube section 151. For example, the central axis of the second tube section 152 is parallel to the central axis of the first tube section 151. Alternatively, an included angle is formed between the central axis of the second tube section 152 and the central axis of the first tube section 151.

In some embodiments, the first tube section 151 and the second tube section 152 are rectilinear, and the third tube section 153 is curved. In some embodiments, the first tube section 151, the second tube section 152, and the third tube section 153 are all rectilinear, and the third tube section 153 is curved relative to the first tube section 151 and the second tube section 152. The third tube section 153 may be designed as a U-shaped tube. One end of the U-shaped tube is connected with the second tube section 152, and another end is connected with the first tube section 151. A slag discharging valve 104 may be arranged on a bottom of the reaction kettle 10. An end of the slag discharging valve 104 away from the reaction kettle 10 is connected with the first tube section 151, and the slag discharging valve 104 may control opening and closing of the slag discharging port 14. The central axis of the third tube section 153 is staggered from the central axis of the first tube section 151 and the central axis of the second tube section 152, which may increase the time for ferroferric oxide to flow in the outlet tube 15 and facilitate the adsorption of ferroferric oxide by the second electromagnetic coil 32. Therefore, the first tube section 151 is coaxially arranged with the second tube section 152, and the third tube section 153 is connected between the first tube section 151 and the second tube section 152. The central axis of the third tube section 153 deviates from the central axis of the first tube section 151, and the second electromagnetic coil 32 is arranged on the third tube section 153. The second electromagnetic coil 32 may adsorb ferroferric oxide, and impurities may directly flow out from the outlet tube 15, thereby realizing separation of impurities from the ferroferric oxide. In addition, such arrangement may increase the time for the ferroferric oxide to flow in the outlet tube 15, and may prevent the ferroferric oxide from flowing out directly, so as to realize full filtration of the impurities and improve the adsorption effect of ferroferric oxide. In some embodiments, the third tube section 153 may also be designed as, but not limited to, a rectilinear tube, a C-shaped tube, an S-shaped tube, and the like.

In some embodiments, as shown in FIG. 1, an exhausting port 16 and a liquid return port 17 are formed on the reaction kettle 10. The recycling system 100 further includes a condenser 50 and a gas-liquid separator 60. One end of condenser 50 is connected with the exhausting port 16. The gas-liquid separator 60 includes a gas-liquid separator inlet 61, a gas-liquid separator exhausting port 62, and a gas-liquid separator liquid outlet 63. The gas-liquid separator inlet 61 is connected with another end of the condenser 50, the gas-liquid separator exhausting port 62 is in communication with the outside, and the gas-liquid separator liquid outlet 63 is connected with the liquid return port 17.

An upper end of the reaction kettle 10 is provided with the exhausting port 16 and the liquid return port 17. When the reaction kettle 10 operates, internally rising gas may be discharged from the exhausting port 16 into the condenser 50, and a liquid is formed under the action of the condenser 50 and flow into the gas-liquid separator 60. Due to a high temperature in the reaction kettle 10, a fluid entering the exhausting port 16 is a mixture of air and steam. The mixed fluid enters the condenser 50 for condensation, so that the steam condenses into saturated water and flow back into the reaction kettle 10 along the liquid return port 17, and the air is discharged along the exhausting port 62 of the gas-liquid separator 60. Herein, the exhausting port 62 of the gas-liquid separator 60 may communicate with the outside atmosphere to directly exhaust the air to the atmosphere, or the exhausting port 62 of the gas-liquid separator 60 may be connected with a gas treatment device (not shown in the figure), and the gas discharged from the gas-liquid separator 60 may enter the gas treatment device for treatment and then be discharged. In this way, a utilization rate of the geothermal water may be increased by arranging the condenser 50 and the liquid return port 17, and the gas may be discharged by arranging the exhausting port 16.

In some embodiments, as shown in FIG. 1 and FIG. 3, a gas distribution disk 70 is arranged in the reaction kettle 10. The gas distribution disk 70 is arranged at the bottom of the reaction kettle 10. It should be noted that, the bottom of the reaction kettle 10 may be a side wall of the bottom of the reaction kettle 10, or may be a bottom wall of the reaction kettle 10. Multiple aeration heads 71 are arranged on the gas distribution disk 70. Specifically, the gas distribution disk 70 may include a main tube 710 and multiple branch tubes 720 connected with the main tube 710. The multiple branch tubes 720 are distributed on the main tube 710 at intervals, and the multiple branch tubes 720 may be symmetrically arranged relative to a central axis of the reaction kettle 10 in the reaction kettle 10. The multiple aeration heads 71 are arranged on each of the branch tubes 720 at intervals, the aeration heads 71 are in communication with the branch tube 720, the branch tube 720 is in communication with one end of the main tube 710, and another end of the main tube 710 extends through the reaction kettle 10 from the bottom of the reaction kettle 10 to communicate with the outside. The gas distribution disk 70 is in communication with the gas inlet 13, so that the geothermal water in the reaction kettle 10 can fully react to generate ferroferric oxide, thereby improving the recycling efficiency of ferroferric oxide. In some embodiments, the reaction kettle 10 is provided with an air compressor 90 at a gas inlet side of the gas inlet 13, thereby increasing an air speed and an air volume, and further improving the recycling efficiency of ferroferric oxide. Exemplarily, in this embodiment, the other end of the main tube 710 may be connected with the air compressor 90, and the air compressor 90 may guide outside air into the gas distribution disk 70. Specifically, one end of the main tube 710 extends into the reaction kettle 10 through the gas inlet 13, and the other end of the main tube 710 is connected with the air compressor 90.

Therefore, the gas distribution disk 70 and the aeration heads 71 are arranged in the reaction kettle 10, and the aeration heads 71 may be arranged in the circumferential direction of the reaction kettle 10, so that the aeration heads 71 may provide enough gas, and the geothermal water can fully react to generate ferroferric oxide, thereby improving the recycling efficiency of ferroferric oxide.

In some embodiments, as shown in FIG. 1, a filter membrane 121 is arranged at the liquid outlet 12 to filter solids existing in the geothermal water to prevent the solids from entering the valve body 102. The valve body 102 controls opening and closing of the liquid outlet 12, thereby reducing the influence of the solids on the valve body 102, improving operating efficiency of the valve body 102, and increasing a service life of the valve body 102.

In some embodiments, an aperture of the filter membrane 121 is d, where d satisfies: 0.3 µm ≤ d ≤ 1 µm . Therefore, the aperture of the filter membrane 121 is controlled to control flow of solids in geothermal water, to ensure that some fine particles may be discharged without damaging the valve body 102, so that the ferroferric oxide may flow toward the slag discharging port 14, thereby improving the recycling of ferroferric oxide, ensuring the service life of the valve body 102, and avoiding blockage of the liquid outlet 12.

In some embodiments, as shown in FIG. 1, the recycling system 100 further includes a box 80. The reaction kettle 10 is arranged in the box 80. Therefore, the reaction kettle 10 is arranged in the box 80, so as to improve safety of use of the reaction kettle 10 and facilitate mounting of the reaction kettle 10, so that the whole recycling system 100 is more beautiful. For example, the reaction kettle 10 is fixedly mounted to the box 80 to ensure reliability of mounting.

In some embodiments, the liquid inlet 11 is formed on a top of the reaction kettle 10, and the gas inlet 13 and the liquid outlet 12 are spaced apart from each other and formed on the bottom of the reaction kettle 10. For example, the gas inlet 13 and the liquid outlet 12 are arranged opposite to each other in a radial direction of the reaction kettle 10 and close to the bottom of the reaction kettle 10, and the slag discharging port 14 is formed on the bottom of the reaction kettle 10 and spaced apart from the liquid outlet 12. In this way, the gas may be fully mixed with the geothermal water, to improve efficiency of a chemical reaction, and the liquid outlet 12 arranged in this way may facilitate discharging of the geothermal water.

In some embodiments, the reaction kettle 10 includes a metal member or a plastic member. In this way, a material of the reaction kettle 10 may be specifically determined according to the actual situation, so as to give consideration to the recycling efficiency and reduce costs of manufacturing the reaction kettle 10.

In some embodiments, the stirring rod 21 and the stirring paddle 22 each include, but are not limited to, stainless steel members. This is mainly because stainless steel members have corrosion resistance, stable chemical properties, and high strength and hardness, which may reduce the influence of the stirring paddle 22 and the stirring rod 21 on the geothermal water during stirring, so as to realize higher purity of the generated ferroferric oxide and facilitate the recycling of the recycling system 100.

The operation method of the recycling system 100 of the present disclosure is described below with reference to FIG. 1 to FIG. 3, including the following steps:
Step I: A sodium hydroxide solution is added to heated geothermal water to adjust a condition required for a reaction. For example, sodium hydroxide may adjust a PH value of geothermal water, which is helpful to the reaction of the recycling system 100. After the geothermal water is injected into the reaction kettle 10, air is introduced, and the stirring device 20 is continuously rotated, so that the air is mixed with the geothermal water under the action of the aeration heads 71, then air is introduced for a preset time until ferroferric oxide is completely precipitated. The preset time is approximately 30 minutes to 60 minutes.
Step II: Turn-on of the air compressor 90 and operation of the aeration head 71 are maintained. A motor of the recycling system 100 is started, and the motor drives the stirring rod 21 to drive the stirring paddle 22 to rotate and stir for 25 minutes to 50 minutes, so that the ferroferric oxide is completely suspended in the geothermal water.
Step III: A first electromagnetic coil 31 is energized and maintained for 30 minutes to 60 minutes, so that a ferroferric oxide film is formed on the inner wall of the reaction kettle 10.
Step IV: The stirring device 20 and the air compressor 90 are turned off, the liquid outlet 12, the return valve 101, and the drain valve 103 are opened, the valve body 102 at the liquid outlet 12 is opened, and opening degrees of the return valve 101 and the drain valve 103 are adjusted, so that a liquid level in the reaction kettle 10 drops at a speed of 1 BV/h to 3 BV/h. The backflow solution flowing through the return valve 101 is distributed along the inner wall of the reaction kettle 10 through the liquid distributor 40, and the solution continuously washes the ferroferric oxide on the wall of the reaction kettle 10 above the liquid level. When the liquid level is lower than the lowest point of the first electromagnetic coil 31, the return valve 101 is closed to discharge the remaining geothermal water.
Step V: The slag discharging valve 104 is opened to discharge impurities such as precipitates until a clear liquid containing no solid impurities flows out from the outlet tube 15, and all residual clear liquid in the reaction kettle 10 is drained.
Step VI: The air compressor 90 is restarted, and inside of the reaction kettle 10 is blown and dried for 5 minutes to 10 minutes through the aeration head 71.
Step VII: The first electromagnetic coil 31 and the second electromagnetic coil 32 are turned off, and ferroferric oxide is recycled from the reaction kettle 10 and the outlet tube 15.

In addition, during the reaction of the reaction kettle 10, the exhausting port 16 and the liquid return port 17 arranged on the reaction kettle 10 are respectively connected with the condenser 50 and the gas-liquid separator 60. The condenser 50 is configured to condense the air that does not participate in the reaction and water vapor generated from the reaction, the condensed saturated water flows to the reaction kettle 10 through the gas-liquid separator 60, and the air is discharged through the gas-liquid separator 60.

In this way, iron is directly recycled from geothermal water and separated from other impurities, so that treatment efficiency of the geothermal water may be improved, investment costs of related devices in the recycling system 100 may be reduced, the recycling efficiency of ferroferric oxide is high, and the use of fresh water is saved without introducing additional water sources. Therefore, the recycling system 100 has desirable universality and sustainability.

In the description of the present disclosure, it needs to be understood that orientation or position relationships indicated by the terms such as "central", "longitudinal", "transverse", "length", "width", "thickness", "up", "down", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are merely used for ease and brevity of description of the present disclosure, rather than indicating or implying that the mentioned device or element needs to have a particular orientation or be constructed and operated in a particular orientation. Therefore, such terms should not be construed as a limitation on the present disclosure.

In the description of the present disclosure, "first feature" and "second feature" may include one or more of these features. In the description of the present disclosure, "multiple" means two or more. In the description of the present disclosure, the first feature "above" or "below" the second feature may include direct contact between the first feature and the second feature, or may include that the first feature and the second feature are not in direct contact but contact through another feature therebetween. In the description of the present disclosure, the first feature "on", "above", or "over" the second feature includes that the first feature is right above and on the inclined top of the second feature or merely indicates that a level of the first feature is higher than that of the second feature.

In the descriptions of this specification, the description of reference terms such as "one embodiment", "some embodiments", "an exemplary embodiment", "an example", "a specific example", or "some examples" means that specific features, structures, materials, or characteristics described in combination with the embodiment or examples are included in at least one embodiment or example of the present disclosure. In this specification, schematic descriptions of the foregoing terms do not necessarily refer to the same embodiment or example.

Although the embodiments of the present disclosure have been shown and described, a person of ordinary skill in the art may understand that various changes, modifications, replacements, and variations may be made to the embodiments without departing from the principles and spirit of the present disclosure, and the scope of the present disclosure is defined by the claims and their equivalents.

## Claims

1. A recycling system (100), comprising:
a reaction kettle (10), the reaction kettle (10) being provided with a liquid inlet (11), a gas inlet (13), a liquid outlet (12), and a slag discharging port (14);
a stirring device (20), the stirring device (20) being arranged on the reaction kettle (10), the stirring device (20) comprising a stirring rod (21) and at least one stirring paddle (22), one end of the stirring rod (21) extending into the reaction kettle (10), and the at least one stirring paddle (22) being arranged at the end of the stirring rod (21) extending into the reaction kettle (10); and
an electromagnetic device (30), the electromagnetic device (30) comprising a first electromagnetic coil (31), the first electromagnetic coil (31) being wound on an outer peripheral surface of the reaction kettle (10).

2. The recycling system (100) according to claim 1, further comprising:
a liquid distributor (40), the liquid distributor (40) being connected to an inner wall of the reaction kettle (10), the liquid distributor (40) being located above the first electromagnetic coil (31), and a liquid distributor outlet (41) being formed at a bottom of an outer peripheral side of the liquid distributor (40).

3. The recycling system (100) according to claim 2, wherein the liquid distributor (40) is connected with the liquid outlet (12).

4. The recycling system (100) according to any of claims 1 to 3, wherein the electromagnetic device (30) further comprises a second electromagnetic coil (32);
an outlet tube (15) is arranged at the slag discharging port (14); and the second electromagnetic coil (32) is wound outside the outlet tube (15).

5. The recycling system (100) according to claim 4, wherein the outlet tube (15) comprises:
a first tube section (151), the first tube section (151) being connected with the slag discharging port (14);
a second tube section (152), the second tube section (152) being located at a side of the first tube section (151) away from a center of the reaction kettle (10); and
a third tube section (153), the third tube section (153) being connected between the first tube section (151) and the second tube section (152), a central axis of the third tube section (153) deviating from a central axis of the first tube section (151), and the second electromagnetic coil (32) being wound outside the third tube section (153).

6. The recycling system (100) according to any of claims 1 to 5, further comprising an exhausting port (16) and a liquid return port (17) being formed on the reaction kettle (10); and
the recycling system (100) further comprises:
a condenser (50), one end of the condenser (50) being connected with the exhausting port (16); and
a gas-liquid separator (60), the gas-liquid separator (60) comprising a gas-liquid separator inlet (61), a gas-liquid separator exhausting port (62), and a gas-liquid separator liquid outlet (63), the gas-liquid separator inlet (61) being connected with another end of the condenser (50), the gas-liquid separator exhausting port (62) being in communication with outside, and the gas-liquid separator liquid outlet (63) being connected with the liquid return port (17).

7. The recycling system (100) according to any of claims 1 to 6, further comprising a gas distribution disk (70) in communication with the gas inlet (13) being arranged in the reaction kettle (10), and a plurality of aeration heads (71) being arranged on the gas distribution disk (70).

8. The recycling system (100) according to any of claims 1 to 7, further comprising a filter membrane (121) being arranged at the liquid outlet (12).

9. The recycling system (100) according to claim 8, wherein an aperture of the filter membrane (121) is d, wherein d satisfies: 0.3 µm ≤ d ≤ 1 µm.

10. The recycling system (100) according to any of claims 1 to 9, further comprising:
a box (80), the reaction kettle (10) being arranged in the box (80).

11. The recycling system (100) according to any of claims 1 to 9, wherein the liquid inlet (11) is formed on a top of the reaction kettle (10); the gas inlet (13) and the liquid outlet (12) are spaced apart from each other and formed on a bottom of the reaction kettle (10); and the slag discharging port (14) is formed on the bottom of the reaction kettle (10) and is spaced apart from the liquid outlet (12).

12. The recycling system (100) according to any of claims 1 to 9, wherein the reaction kettle (10) comprises a metal member or a plastic member.

13. The recycling system (100) according to any of claims 1 to 9, wherein the stirring rod (21) and the stirring paddle (22) each comprise a stainless steel member.

14. The recycling system (100) according to claim 2 or 3, further comprising a return valve (101) being arranged on a liquid pipeline between the liquid outlet (12) and the liquid distributor (40).

15. The recycling system (100) according to claim 5, wherein the third tube section (153) is curved.

16. The recycling system (100) according to claim 7, wherein the plurality of aeration heads (71) are arranged at intervals in a circumferential direction of the reaction kettle (10).

17. The recycling system (100) according to claim 7 or 16, wherein the gas distribution disk (70) comprises a main tube (710) and a plurality of branch tubes (720) connected with the main tube (710); the plurality of branch tubes (720) are distributed on the main tube (710) at intervals; the plurality of aeration heads (71) are arranged on each of the branch tubes (720) at intervals; and the plurality of aeration heads (71) are in communication with the branch tubes (720).

18. The recycling system (100) according to claim 17, wherein one end of the main tube (710) is in communication with the branch tube (720); and another end of the main tube (710) extends through the reaction kettle (10) from the bottom of the reaction kettle (10) to communicate with the outside.

19. The recycling system (100) according to claim 17 or 18, wherein the plurality of branch tubes (720) are symmetrically arranged in the reaction kettle (10) relative to the central axis of the reaction kettle (10).

20. The recycling system (100) according to any of claims 7 and 16 to 19, further comprising an air compressor (90), the air compressor (90) being connected with the gas distribution disk (70).
